# EUROPEAN PATENT APPLICATION

(11) **EP 4 582 974 A1**
(43) Date of publication of application: **09.07.2025**
(21) Application number: 23859153.1
(22) Date of filing: 16.08.2023
(51) Int. Cl.: G06F 16/44, G06F 3/0484

(54) **MULTIMEDIA WORK DISPLAY METHOD, APPARATUS AND DEVICE, AND STORAGE MEDIUM**

(30) Priority: 31.08.2022 CN 202211062732
(71) Applicant: Beijing Zitiao Network Technology Co., Ltd., Beijing 100190 (CN)
(72) Inventor: ZENG, Zhizheng, Beijing 100028 (CN); WANG, Tingting, Beijing 100028 (CN); LIU, Jianqiang, Beijing 100028 (CN); LI, Qian, Beijing 100028 (CN)
(74) Representative: Dentons UK and Middle East LLP
(86) International application number: PCT/CN2023/113237
(87) International publication number: WO 2024/046119

(57) **Abstract**

The present disclosure provides a multimedia work display method, apparatus and device, and a storage medium. The method comprises : first displaying, on a target page corresponding to a first user, multimedia works corresponding to the first user of the multimedia works; and then in response to a trigger operation for a preset ranking control on the target page of the multimedia works, updating, according to a descending order arrangement mode of the number of user interactions of the multimedia works, a display sequence of the multimedia works corresponding to the first user of the multimedia works on the target page of the multimedia works. Hence, in the embodiments of the present disclosure, by means of the trigger operation for the preset ranking control on the target page, the multimedia works can be displayed according to the descending order arrangement mode of the number of user interactions, so that the display form of the multimedia works is enriched and the user experience is improved.

## Description

The present application claims priority of Chinese Patent Application No. 202211062732.4 filed on August 31, 2022, the disclosure of which is incorporated herein by reference in its entirety as part of the present application.

### TECHNICAL FIELD

The present disclosure relates to a multimedia work exhibiting method, an apparatus, a device and a storage medium.

### BACKGROUND

With the continuous development of multimedia short video technology, more and more users are recording their work and life by publishing multimedia works.

However, an exhibition form of the current multimedia works is relatively monotonous and cannot meet the needs of the users. Therefore, how to enrich the exhibition form of the multimedia works and enhance user's experience is an urgent technical problem that needs to be solved.

### SUMMARY

In order to solve the above-described technical problems, an embodiment of the present disclosure provides a multimedia work exhibiting method.

In a first aspect, the present disclosure provides a multimedia work exhibiting method, and the method comprises:
exhibiting multimedia works corresponding to a first user on a target page corresponding to the first user; in which a cover of each of the multimedia works displays a user interaction count corresponding to the each of the multimedia works;
updating an exhibition order of the multimedia works corresponding to the first user on the target page in a descending sort order of the user interaction counts, in response to a trigger operation on a preset sorting control on the target page.

In an optional implementation, the updating an exhibition order of the multimedia works corresponding to the first user on the target page in a descending sort order of the user interaction counts, in response to a trigger operation on a preset sorting control on the target page, comprises:
sorting the multimedia works corresponding to the first user in a descending sort order, according to the user interaction count corresponding to the each of the multimedia works, in response to the trigger operation on the preset sorting control on the target page, to obtain the exhibition order of the multimedia works sorted in the descending sort order;
updating the exhibition order of the multimedia works corresponding to the first user on the target page, based on the exhibition order of the multimedia works sorted in the descending sort order.

In an optional implementation, the user interaction count comprises a like count, and the sorting the multimedia works corresponding to the first user in a descending sort order, according to the user interaction count corresponding to the each of the multimedia works, in response to the trigger operation on the preset sorting control on the target page, to obtain the exhibition order of the multimedia works sorted in the descending sort order, comprises:
sorting the multimedia works corresponding to the first user in the descending sort order priority according to the like count corresponding to the each of the multimedia works, in response to the trigger operation on the preset sorting control on the target page; and sorting the multimedia works with the same like count in a descending sort order according to a play count corresponding to the each of the multimedia works, to obtain the exhibition order of the multimedia works sorted in the descending sort order.

In an optional implementation, the method further comprises:
displaying sorting prompt information within a preset region on the target page, in response to the trigger operation on the preset sorting control on the target page; in which the sorting prompt information is used for prompting a sorting mode corresponding to the exhibition order of the multimedia works corresponding to the first user exhibited on the target page;
hiding and not displaying the sorting prompt information, when monitoring that a display duration of the sorting prompt information reaches a preset duration.

In an optional implementation, after the updating an exhibition order of the multimedia works corresponding to the first user on the target page in a descending sort order of the user interaction counts, in response to a trigger operation on a preset sorting control on the target page, the method further comprises:
acquiring work interaction data of the first user within a current update cycle according to a preset update frequency; in which the work interaction data comprises an identifier of at least one of the multimedia works having a changed user interaction count;
acquiring a current user interaction count of the multimedia works corresponding to the first user based on the identifier of the at least one of the multimedia works;
updating the exhibition order of the multimedia works corresponding to the first user on the target page, based on the current user interaction count of the multimedia works corresponding to the first user.

In an optional implementation, the acquiring work interaction data of the first user within a current update cycle according to a preset update frequency, comprises:
reading the work interaction data of the first user within the current update cycle from a message queue of a target server according to the preset update frequency.

In an optional implementation, the acquiring work interaction data of the first user within a current update cycle according to a preset update frequency, comprises:
reading the work interaction data of the first user within delay time corresponding to a delay message from a delay queue, based on the delay message; in which the delay time is used for representing an update frequency of the exhibition order of the multimedia works corresponding to the first user.

In a second aspect, the present disclosure provides a multimedia work exhibiting apparatus, and the apparatus comprises:
an exhibiting module, configured to exhibit multimedia works corresponding to a first user on a target page corresponding to the first user; in which a cover of each of the multimedia works displays a user interaction count corresponding to the each of the multimedia works;
a first updating module, configured to update an exhibition order of the multimedia works corresponding to the first user on the target page in a descending sort order of the user interaction counts, in response to a trigger operation on a preset sorting control on the target page.

In a third aspect, the present disclosure provides a computer readable storage medium, and the computer readable storage medium having instructions stored thereon, in which the instructions, when running on a terminal device, cause the terminal device to implement the method mentioned above.

In a fourth aspect, the present disclosure provides a multimedia work exhibiting device, which comprises a memory, a processor, and a computer program stored on the memory and executable on the processor, in which the processor, when executing the computer program, implements the method mentioned above.

In a fifth aspect, the present disclosure provides a computer program product, the computer program product comprises a computer program/instruction, in which the computer program/instruction, when executed by a processor, implements the method mentioned above.

The technical solutions provided by the embodiment of the present disclosure at least have the following advantages as compared with the existing technologies:
The embodiment of the present disclosure provides a multimedia work exhibiting method. Firstly, multimedia works corresponding to a first user of the multimedia works are exhibited on a target page corresponding to the first user, in which a cover of each of the multimedia works displays a user interaction count corresponding to the each of the multimedia works; and then an exhibition order of the multimedia works corresponding to the first user of the multimedia works on the target page of the multimedia works is updated in a descending sort order of the user interaction counts of the multimedia works, in response to a trigger operation on a preset sorting control on the target page of the multimedia works. It may be seen that in the embodiment of the present disclosure, the multimedia works may be exhibited in a descending sort order of the user interaction counts, by performing the trigger operation on the preset sorting control on the target page, which enriches exhibition forms of the multimedia works and enhances user's experience.

### BRIEF DESCRIPTION OF DRAWINGS

The accompanying drawings, which are hereby incorporated in and constitute a part of the present description, illustrate embodiments of the present disclosure, and together with the description, serve to explain the principles of the embodiments of the present disclosure.

To describe the embodiments of the present disclosure more clearly, the accompanying drawings required in the description of the embodiments will be described briefly below. Apparently, other accompanying drawings can also be derived from these drawings by those ordinarily skilled in the art without creative efforts.
Fig. 1 is a flow chart of a multimedia work exhibiting method provided by an embodiment of the present disclosure;
Fig. 2 is a schematic diagram of a target page provided by an embodiment of the present disclosure;
Fig. 3 is a schematic diagram of another target page provided by an embodiment of the present disclosure;
Fig. 4 is a schematic diagram of still another target page provided by an embodiment of the present disclosure;
Fig. 5 is a flow chart of another multimedia work exhibiting method provided by an embodiment of the present disclosure;
Fig. 6 is a structural schematic diagram of a multimedia work exhibiting apparatus provided by an embodiment of the present disclosure; and
Fig. 7 is a structural schematic diagram of a multimedia work exhibiting device provided by an embodiment of the present disclosure.

### DETAILED DESCRIPTION

To provide a clearer understanding of the objectives, features, and advantages of the embodiments of the present disclosure, the solutions in the embodiments of the present disclosure will be further described below. It should be noted that the embodiments in the present disclosure and features in the embodiments may be combined with one another without conflict.

Many specific details are described below to help fully understand the embodiments of the present disclosure. However, the embodiments of the present disclosure may also be implemented in other manners different from those described herein. Apparently, the described embodiments in the specification are merely some rather than all of the embodiments of the present disclosure.

In order to enrich exhibition forms of multimedia works and enhance user's experience, at least one embodiment of the present disclosure provides a multimedia work exhibiting method.

Specifically, multimedia works corresponding to a first user of the multimedia works are exhibited on a target page corresponding to the first user, in which a cover of each of the multimedia works displays a user interaction count corresponding to the each of the multimedia works; and then an exhibition order of the multimedia works corresponding to the first user of the multimedia works on the target page of the multimedia works is updated in a descending sort order of the user interaction counts of the multimedia works, in response to a trigger operation on a preset sorting control on the target page of the multimedia works.

It may be seen that in the embodiment of the present disclosure, the multimedia works may be exhibited in a descending sort order of the user interaction counts, by performing the trigger operation on the preset sorting control on the target page, which enriches the exhibition forms of the multimedia works and enhances user's experience.

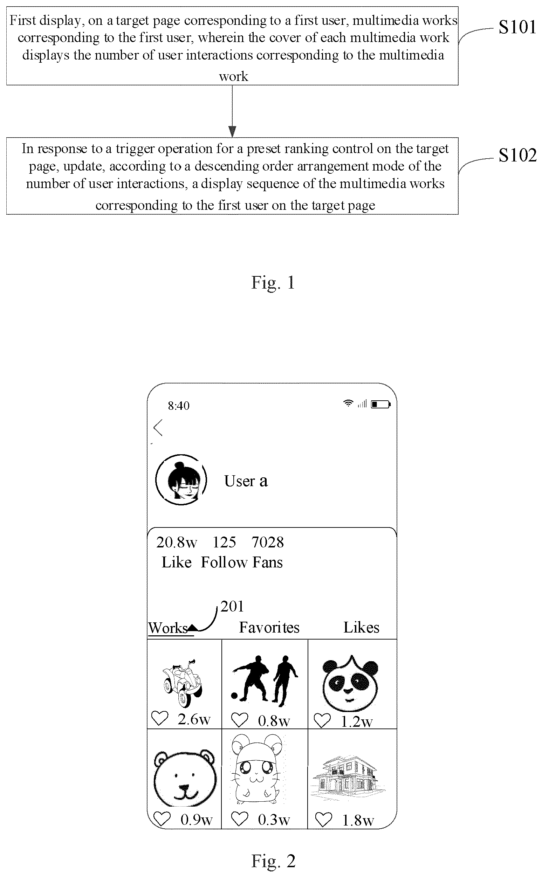

Based on this, at least one embodiment of the present disclosure provides a multimedia work exhibiting method, referring to Fig. 1, Fig. 1 is a flow chart of a multimedia work exhibiting method provided by an embodiment of the present disclosure; and the method includes:
S101: exhibiting multimedia works corresponding to a first user on a target page corresponding to the first user.

In which covers of the multimedia works display user interaction counts of the multimedia works respectively, and the user interaction counts are used for representing popularity degrees of the multimedia works respectively.

The multimedia work exhibiting method provided by the embodiment of the present disclosure may be applied to a client, for example, the client may include a client deployed on a smartphone, a client deployed on a tablet computer and so on.

In the embodiment of the present disclosure, the first user may refer to a user whose account is currently logged into on the client, the target page corresponding to the first user may be a personal homepage of the first user, and the personal homepage exhibits the multimedia works corresponding to the first user, in which the multimedia works may be videos published by the first user.

The first user may also refer to other user followed by the user whose account is currently logged into, correspondingly, the target page corresponding to the first user may be a personal homepage of the other user followed by the user whose account is currently logged into, and the personal homepage exhibits videos published by the other user followed by the user whose account is currently logged into, which will not be limited in the present disclosure.

The user interaction count according to the embodiment of the present disclosure may include a like count, a play count, a forward count, and a comment count and so on.

Referring to Fig. 2, Fig. 2 is a schematic diagram of the target page provided by an embodiment of the present disclosure, in which the target page is the personal homepage of the first user, the target page exhibits information such as an avatar and a name of the first user, and may further display a switchable tab bar for switching between a work tab, a favorite tab, a like tab, etc. Specifically, different tabs correspond to different multimedia works. The work tab corresponds to the multimedia work published by the first user, the favorite tab corresponds to the multimedia work collected by the first user, and the like tab corresponds to the multimedia work liked by the first user.

In which the multimedia works corresponding to the work tabs, the multimedia works corresponding to the favorite tabs, and the multimedia works corresponding to the like tabs may be sorted based on a descending sort order of the user interaction counts respectively, and it will be illustrated below by taking the multimedia works corresponding to the work tabs as an example.

As shown in Fig. 2, the target page corresponding to the first user displays a plurality of multimedia works, and a cover of each of the multimedia works displays a user interaction count corresponding to the each of the multimedia works, as shown in Fig. 2, taking the user interaction count as the like count, the higher the like count, the more popular the multimedia work is.

In the embodiment of the present disclosure, with respect to the respective multimedia works exhibited on the target page, the cover of each of the multimedia works displays a user interaction count corresponding to the each of the multimedia works, as shown in Fig. 2, the user interaction count is represented by the like count, and the cover of the each of the multimedia works exhibits the like count.

It should be noted that, the multimedia works corresponding to the first user are sorted based on an order of publication time by default, that is, an exhibition order of the respective multimedia works displayed in S101 is sorted based on an order of the publication time.

S102: updating an exhibition order of the multimedia works corresponding to the first user on the target page in a descending sort order of the user interaction counts, in response to a trigger operation on a preset sorting control on the target page.

In which the preset sorting control refers to a pre-set control used for sorting in a certain mode, the preset sorting control may be a popularity control, which is used for sorting the respective multimedia works based on the popularity of different multimedia works, the popularity of the different multimedia works may be represented by the user interaction counts of the respective multimedia works, and the more the user interaction count, the higher the popularity of the corresponding multimedia work, and the higher its ranking.

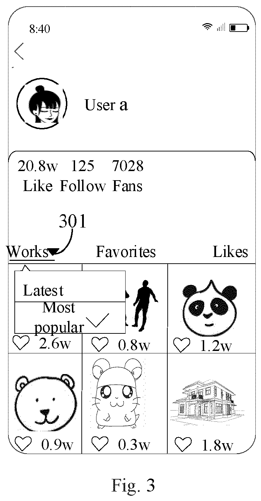

In the embodiment of the present disclosure, there are a variety of modes of the trigger operation on the preset sorting control. Mode 1: taking Fig. 2 as an example, a dropdown list may be triggered by clicking or placing a mouse on a control 201, the dropdown list includes the preset sorting control, as shown in Fig. 3, the dropdown list includes a "latest" control 301 and a "most popular" control 302, with the "most popular" control 302 representing the preset sorting control; and when the user clicks on the "most popular" control 302, a multimedia list on the target page may be exhibited in a descending sort order of the user interaction counts (like counts). Mode 2: the preset sorting control may be set in any blank position on the target page corresponding to the first user, and the user may implement the trigger operation on the preset sorting control by directly clicking on the preset sorting control.

In addition, in order to enable users to clearly perceive whether trigger of the control 201 is successful, the control 201 may also be set, specifically, with further reference to Fig. 2, before the user triggers the control 201, the control 201 may be set to have a shape of an upright triangle; and after the user triggers the control 201, the upright triangle corresponding to the control 201 may be switched to an upturned triangle, that is, an effect as exhibited by the control 301 in Fig. 3.

It should be noted that the dropdown list may be automatically closed when the user triggers the preset sorting control, or may also be closed when the user clicks on any blank space on the target page.

In an optional implementation, the multimedia works corresponding to the first user are sorted in a descending sort order according to a user interaction count corresponding to each of the multimedia works, in response to the trigger operation on the preset sorting control on the target page, to obtain an exhibition order of the multimedia works sorted in the descending sort order; and the exhibition order of the multimedia works corresponding to the first user on the target page is updated, based on the exhibition order of the multimedia works sorted in the descending sort order.

Assuming that the user interaction count is the like count, when the like counts (user interaction counts) are the same, multimedia works with the same like count may also be sorted in a descending sort order according to play counts thereof. In an optional implementation, the multimedia works corresponding to the first user are sorted in the descending sort order preferentially according to a like count corresponding to each of the multimedia works, in response to a trigger operation on the preset sorting control on the target page, and with respect to the multimedia works with the same like count, the multimedia works are sorted in the descending sort order according to the play count corresponding to the each of the multimedia works, to obtain the exhibition order of the multimedia works sorted in the descending sort order.

In another optional implementation, the multimedia works corresponding to the first user are sorted in the descending sort order preferentially according to a like count corresponding to the each of the multimedia works, in response to a trigger operation on the preset sorting control on the target page, and with respect to the multimedia works with the same like count, the multimedia works are sorted in a descending sort order according to a play count corresponding to the each of the multimedia works, to obtain the exhibition order of the multimedia works sorted in the descending sort order; if the play counts are still the same, the multimedia works may be sorted in the descending sort order according to the publication time of the each of the multimedia works, to obtain the exhibition order of the multimedia works sorted in the descending sort order.

Optionally, if the multimedia works corresponding to the first user exhibited on the target page includes the multimedia work carrying a top identifier; and after receiving the trigger operation on the preset sorting control on the target page, the multimedia work carrying the top identifier will also participate in sorting.

In which the multimedia work carrying the top identifier is exhibited in the first multimedia work on the target page.

Further, in order to enable user to clearly perceive the sorting mode of the multimedia works, sorting prompt information may also be displayed after the user triggers the preset sorting control. In an optional implementation, the sorting prompt information is displayed in a preset region on the target page, in response to a trigger operation on the preset sorting control on the target page, and when it is monitored that a display duration of the sorting prompt information reaches a preset duration, the sorting prompt information is hidden and not displayed.

In which, the sorting prompt information is used for prompting a sorting mode corresponding to the exhibition order of the multimedia works corresponding to the first user exhibited on the target page.

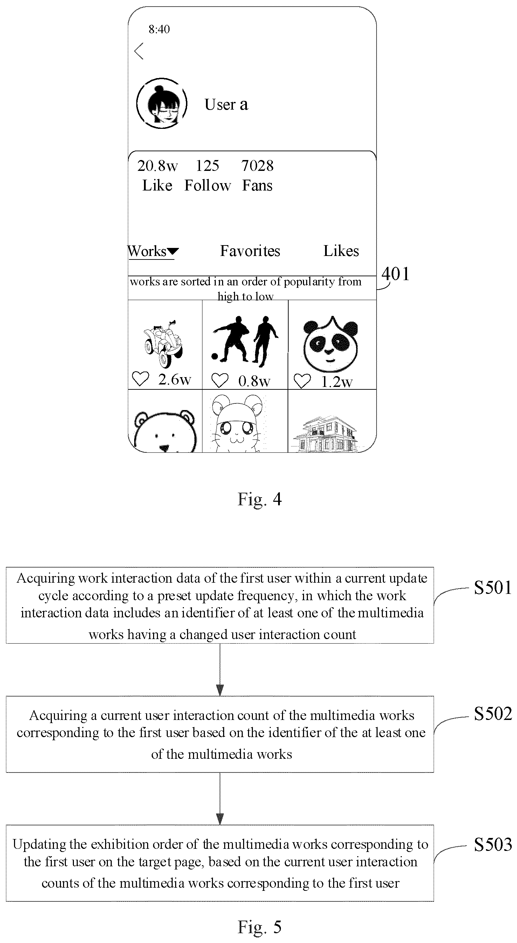

In the embodiment of the present disclosure, the preset region may be any region on the target page, which, for example, may be set in a top position of the multimedia work, for example, a preset region 401 shown in Fig. 4.

The preset duration refers to a pre-set display duration of the sorting prompt information, for example, the preset duration may be set to 3 seconds, and when it is monitored that the display duration of the sorting prompt information reaches 3 seconds, the sorting prompt information will be automatically hidden and not displayed.

Referring to Fig. 4, Fig. 4 is a schematic diagram of still another target page provided by an embodiment of the present disclosure, a preset region 401 is displayed, the preset region displays sorting prompt information, for example, works are sorted in an order of popularity from high to low; specifically, after receiving a trigger operation on the preset sorting control on the target page, the multimedia works integrally move down, and meanwhile the preset region 401 is exhibited on the target page, the preset region 401 displays the sorting prompt information of "works are sorted in an order of popularity from high to low", when it is monitored that the display duration of the sorting prompt information reaches the preset duration, the sorting prompt information is hidden and not displayed, and meanwhile, the multimedia works are moved up and restored to the starting position.

In the multimedia work exhibiting method provided by the embodiment of the present disclosure, firstly, the multimedia works corresponding to the first user of the multimedia works are exhibited on the target page corresponding to the first user, in which a cover of the each of the multimedia works displays a user interaction count corresponding to the each of the multimedia works, and then the exhibition order of the multimedia works corresponding to the first user of the multimedia works on the target page of the multimedia works is updated in a descending sort order of the user interaction counts of the multimedia works, in response to the trigger operation on the preset sorting control on the target page of the multimedia works. It may be seen that in the embodiment of the present disclosure, the multimedia works may be exhibited in the descending sort order of the user interaction counts, by performing the trigger operation on the preset sorting control on the target page, which enriches exhibition forms of the multimedia works and enhances user's experience.

Based on the above-described embodiment, in order to further understand the multimedia work exhibiting method provided by the embodiment of the present disclosure, the present disclosure further provides a multimedia work exhibiting method, referring to Fig. 5, Fig. 5 is a flow chart of another multimedia work exhibiting method provided by an embodiment of the present disclosure, and the method includes:

S501: acquiring work interaction data of the first user within a current update cycle according to a preset update frequency.

In which the work interaction data includes an identifier of at least one of the multimedia works having a changed user interaction count.

In the embodiment of the present disclosure, since the target page corresponding to the first user has a limited exhibition space, after updating the exhibition order of the multimedia works corresponding to the first user on the target page in a descending sort order of the user interaction counts, in response to a trigger operation on the preset sorting control on the target page, only some multimedia works corresponding to the first user may be exhibited, as shown in Fig. 2, only 6 multimedia works of the first user may be exhibited, and if the remaining multimedia works of the first user need to be exhibited, exhibition may be triggered by sliding upwards.

Specifically, when the user exhibits the remaining multimedia works of the first user by sliding upwards, since the multimedia works are exhibited in the descending sort order of the user interaction counts, a multimedia work with the least user interaction count is ranked last. Assuming that the multimedia work with the least user interaction count is the multimedia work A, if the user interaction count of the multimedia work A increases rapidly within a short period of time, the multimedia work A will move upwards, which results in a risk of failure to exhibit the multimedia work A when the user exhibits the remaining multimedia works of the first user by sliding upwards.

Thus, when the user triggers to exhibit of the remaining multimedia works of the first user by sliding upwards, the multimedia works corresponding to the first user may be exhibited in the descending sort order of the user interaction counts according to the preset update frequency, that is, within the preset update frequency, when the user triggers to exhibit of the remaining multimedia works of the first user by sliding upwards, a sorting mode of the remaining multimedia works will not change, which ensures the stability of exhibiting the multimedia works.

Specifically, when the user triggers to exhibit the remaining multimedia works of the first user by sliding upwards, the work interaction data of the first user within the current update cycle is acquired from a target server according to the preset update frequency.

In which the work interaction data includes an identifier of a multimedia work having a changed user interaction count.

The preset update frequency may be set based on demands, for example, may be set to 1 hour, which will not be limited in the present disclosure.

The target server provided by the embodiment of the present disclosure may be a server or a server cluster and so on.

In which, there are a variety of modes of acquiring the work interaction data of the first user within the current update cycle from the server according to the preset update frequency, in an optional implementation, the work interaction data of the first user within the current update cycle is read from a message queue of the target server according to the preset update frequency.

Specifically, the target server may monitor the user interaction counts of the multimedia works. When monitoring that a multimedia work corresponding to the first user has a changed user interaction count, the target server will store an identifier of the multimedia work having the changed user interaction count within the current update cycle in a database, for example, stored in the database in a form of Key-Value, where key={userID}_timestamp represents the first user ID; Value=set{itemid1...} represents the identifier of the multimedia work having the changed user interaction count within the current update cycle; and then send userID+set{itemid1...} to the message queue of the target server, so that the client may read the work interaction data of the first user within the current update cycle from the message queue of the target server according to the preset update frequency.

Exemplarily, assuming that the preset update frequency of the client is once every hour, and the update time of the exhibition order of the multimedia works corresponding to the first user on the target page is 11:00 on August 26, 2022, then between 11:00 on August 26, 2022 and 12:00 on August 26, 2022, when the user triggers to exhibit the remaining multimedia works of the first user by sliding upwards, the corresponding exhibition order will not change, however, between 12:00 on August 26, 2022 and 13:00 on August 26, 2022, sorting is performed according to the user interaction counts of the multimedia works within the current update cycle (11:00 on August 26, 2022 to 12:00 on August 26, 2022).

In another optional implementation, based on a delay message, the work interaction data of the first user within the delay time corresponding to the delay message is read from a delay queue.

In which the delay time is used for representing an update frequency of the exhibition order of the multimedia works corresponding to the first user.

Specifically, the target server may monitor the user interaction counts of the multimedia works, and when monitoring that a multimedia work corresponding to the first user has a changed user interaction count, the target server will store an identifier of the multimedia work having the changed user interaction count in a database in real time, for example, stored in the database in a form of Key-Value, where key={userID}_delay timestamp represents the first user ID; Value=set{itemid1...} represents the identifier of the multimedia work having the changed user interaction count within the delay time; and then send {userID}_delay timestamp to a delay queue of the target server, so that the client may read the work interaction data of the first user within the delay time corresponding to the delay message from the delay queue.

It should be noted that before storing the identifier itemid1 of the multimedia work having the changed user interaction count in the database, it is firstly judged whether itemid1 already exists, and then it is judged whether a current key exists, if the current itemid1 already exists, the itemid1 is discarded (i.e., deduplicated); if the current itemid1 does not exist and the current key does not exist, the current key is written into the database, and the kay is sent out through the delay queue, if the current itemid1 does not exist and the current Key exists, then the current itemid1 is written into set{itemid1...} without sending the delay message.

S502: acquiring a current user interaction count of the multimedia works corresponding to the first user based on the identifier of the at least one of the multimedia works.

In the embodiment of the present disclosure, after acquiring the work interaction data of the first user within the current update cycle, the identifier of the at least one of the multimedia works having the changed user interaction count is acquired from the work interaction data, based on the identifier of the at least one of the multimedia works having the changed user interaction count, the current user interaction count of the multimedia work corresponding to the identifier of the at least one of the multimedia works having the changed user interaction count is acquired from the target server.

S503: updating the exhibition order of the multimedia works corresponding to the first user on the target page, based on the current user interaction counts of the multimedia works corresponding to the first user.

In the embodiment of the present disclosure, after the current user interaction counts of the multimedia works corresponding to the first user are acquired, a zipper table is updated by using the current user interaction counts of the multimedia works, so that the exhibition order of the multimedia works corresponding to the first user is updated based on the updated zipper table.

In which an exhibition order table of the multimedia works corresponding to the first user when the user interaction count corresponding to the first user has not changed is stored in the zipper table.

It should be noted that after the exhibition order of the multimedia works corresponding to the first user on the target page is updated, the key-value data of the first user stored in the database of the target server will be deleted.

In the multimedia work exhibiting method provided by the embodiment of the present disclosure, firstly, the work interaction data of the first user within the current update cycle is acquired according to the preset update frequency, in which the work interaction data includes the identifier of the at least one of the multimedia works having the changed user interaction count, then the current user interaction counts of the multimedia works corresponding to the first user are acquired based on the identifier of the at least one of the multimedia works; and further, the exhibition order of the multimedia works corresponding to the first user on the target page is updated, based on the current user interaction count of the multimedia work corresponding to the first user. It may be seen that in the embodiment of the present disclosure, the exhibition order of the multimedia works corresponding to the first user is updated based on the preset update frequency, which ensures the stability of exhibiting of the multimedia works within a certain period of time and improves user's experience.

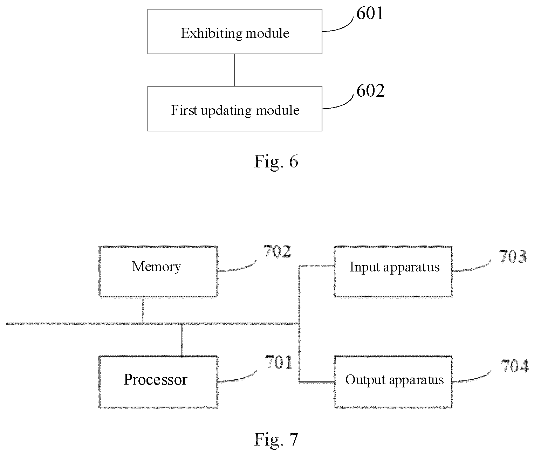

Based on the above-described method embodiment, the present disclosure further provides a multimedia work exhibiting apparatus, referring to Fig. 6, Fig. 6 is a structural schematic diagram of a multimedia work exhibiting apparatus provided by an embodiment of the present disclosure, and the apparatus includes:
an exhibiting module 601, configured to exhibit multimedia works corresponding to a first user on a target page corresponding to the first user; in which a cover of each of the multimedia works displays a user interaction count corresponding to the each of the multimedia works;
a first updating module 602, configured to update an exhibition order of the multimedia works corresponding to the first user on the target page in a descending sort order of the user interaction counts, in response to a trigger operation on a preset sorting control on the target page.

In an optional implementation, the first updating module includes:
a descending order sub-module, configured to sort the multimedia works corresponding to the first user in a descending sort order, according to a user interaction count corresponding to each of the multimedia works, in response to the trigger operation on the preset sorting control on the target page, to obtain the exhibition order of the multimedia works sorted in the descending sort order;
a first updating sub-module, configured to update the exhibition order of the multimedia works corresponding to the first user on the target page, based on the exhibition order of the multimedia works sorted in the descending sort order.

In an optional implementation, the user interaction count includes a like count, and the descending order sub-module is specifically configured to:
sort the multimedia works corresponding to the first user in a descending sort order preferentially according to a like count corresponding to each multimedia work, in response to a trigger operation on the preset sorting control on the target page; and sort the multimedia works with the same like count in a descending sort order according to a play count corresponding to each multimedia work, to obtain an exhibition order of the multimedia works sorted in the descending sort order.

In an optional implementation, the apparatus further includes:
a display module, configured to display sorting prompt information within a preset region on the target page, in response to a trigger operation on the preset sorting control on the target page; in which the sorting prompt information is used for prompting a sorting mode corresponding to the exhibition order of the multimedia works corresponding to the first user exhibited on the target page;
a hiding module, configured to hide and not display the sorting prompt information when monitoring that a display duration of the sorting prompt information reaches a preset duration.

In an optional implementation, the apparatus further includes:
a first acquiring module, configured to acquire work interaction data of the first user within a current update cycle according to a preset update frequency; in which the work interaction data includes the identifier of at least one of the multimedia works having the changed user interaction count;
a second acquiring module, configured to acquire the current user interaction counts of the multimedia works corresponding to the first user based on the identifier of the at least one of the multimedia works;
a second updating module, configured to update the exhibition order of the multimedia works corresponding to the first user on the target page, based on the current user interaction counts of the multimedia works corresponding to the first user.

In an optional implementation, the first acquiring module is specifically configured to:
read the work interaction data of the first user within the current update cycle from a message queue of a target server according to the preset update frequency.

In an optional implementation, the first acquiring module is specifically configured to:
read the work interaction data of the first user within delay time corresponding to a delay message from a delay queue, based on the delay message; in which the delay time is used for representing an update frequency of the exhibition order of the multimedia works corresponding to the first user.

In the multimedia work exhibiting apparatus, firstly, the multimedia works corresponding to the first user of the multimedia works are exhibited on the target page corresponding to the first user, in which a cover of each of the multimedia works displays a user interaction count corresponding to the each of the multimedia works; and then the exhibition order of the multimedia works corresponding to the first user of the multimedia works on the target page of the multimedia works is updated in a descending sort order of the user interaction counts of the multimedia works, in response to the trigger operation on the preset sorting control on the target page of the multimedia works. It may be seen that in the embodiment of the present disclosure, the multimedia works may be exhibited in the descending sort order of the user interaction counts, by performing the trigger operation on the preset sorting control on the target page, which enriches the exhibition forms of the multimedia works and enhances user's experience.

In addition to the above-described method and apparatus, an embodiment of the present disclosure further provides a computer readable storage medium, the computer readable storage medium stores instructions thereon, in which the instructions, when running on a terminal device, cause the terminal device to implement the multimedia work exhibiting method according to the embodiment of the present disclosure.

An embodiment of the present disclosure further provides a computer program product, the computer program product includes a computer program/instruction, in which the computer program/instruction, when executed by a processor, implements the multimedia work exhibiting method according to the embodiment of the present disclosure.

In addition, an embodiment of the present disclosure further provides a multimedia work exhibiting device, and referring to Fig. 7, the device may include:
a processor 701, a memory 702, an input apparatus 703 and an output apparatus 704. The number of the processors 701 in the multimedia work exhibiting device may be one or more, and Fig. 7 is illustrated by taking one processor as an example. In some embodiments of the present disclosure, the processor 701, the memory 702, the input apparatus 703 and the output apparatus 704 may be connected through a bus or other means, and Fig. 7 is illustrated by taking connection through a bus as an example.

The memory 702 may be configured to store software programs and modules, and the processor 701 executes various functional applications of the multimedia work exhibiting device and data processing by running the software programs and the modules stored in the memory 702. The memory 702 may mainly include a program storage region and a data storage region, in which the program storage region may store an operating system, an application required for at least one function, etc. In addition, the memory 702 may include a high-speed random access memory, and may also include a nonvolatile memory, for example, at least one disk storage device, a flash memory, or other volatile solid-state storage device. The input apparatus 703 may be configured to receive input digital or character information, and generate signal inputs related to user settings and function control of the multimedia work exhibiting device.

Specifically, in the present embodiment, the processor 701 will load executable files corresponding to the processes of one or more applications into the memory 702 according to instructions below, and the processor 701 will run the applications stored in the memory 702, thereby implementing various functions of the multimedia work exhibiting device as described above.

It should be noted that, relational terms herein such as "first" and "second" are only used to distinguish one entity or operation from another entity or operation, and do not necessarily require or imply any actual relationship or order between these entities or operations. In addition, the terms "include", "comprise", or any other variants thereof are intended to cover a non-exclusive inclusion, so that a process, a method, a product or a device that includes a list of elements not only includes those elements but also includes other elements that are not expressly listed, or further includes elements inherent to such process, method, product or device. Without more constraints, the elements limited by the statement "including one..." does not exclude that there is another same or identical element in the process, method, product, or device that includes the element.

The above is only the specific implementation provided to enable those skilled in the art to understand and practice the present disclosure. Various modifications to these embodiments will be readily apparent to those skilled in the art, and the generic principles defined herein may be applied to other embodiments without departing from the spirit or scope of the present disclosure. Therefore, the present disclosure will not be limited to these embodiments described herein, but is to be accorded the widest scope consistent with the principles and novel features disclosed herein.

## Claims

1. A multimedia work exhibiting method, comprising:
exhibiting multimedia works corresponding to a first user on a target page corresponding to the first user; wherein a cover of each of the multimedia works displays a user interaction count corresponding to the each of the multimedia works;
updating an exhibition order of the multimedia works corresponding to the first user on the target page in a descending sort order of the user interaction counts, in response to a trigger operation on a preset sorting control on the target page.

2. The method according to claim 1, wherein the updating an exhibition order of the multimedia works corresponding to the first user on the target page in a descending sort order of the user interaction counts, in response to a trigger operation on a preset sorting control on the target page, comprises:
sorting the multimedia works corresponding to the first user in a descending sort order, according to the user interaction count corresponding to the each of the multimedia works, in response to the trigger operation on the preset sorting control on the target page, to obtain the exhibition order of the multimedia works sorted in the descending sort order;
updating the exhibition order of the multimedia works corresponding to the first user on the target page, based on the exhibition order of the multimedia works sorted in the descending sort order.

3. The method according to claim 2, wherein the user interaction count comprises a like count, and the sorting the multimedia works corresponding to the first user in a descending sort order, according to the user interaction count corresponding to the each of the multimedia works, in response to the trigger operation on the preset sorting control on the target page, to obtain the exhibition order of the multimedia works sorted in the descending sort order, comprises:
sorting the multimedia works corresponding to the first user in the descending sort order priority according to the like count corresponding to the each of the multimedia works, in response to the trigger operation on the preset sorting control on the target page; and sorting the multimedia works with the same like count in a descending sort order according to a play count corresponding to the each of the multimedia works, to obtain the exhibition order of the multimedia works sorted in the descending sort order.

4. The method according to any one of claims 1 to 3, further comprising:
displaying sorting prompt information within a preset region on the target page, in response to the trigger operation on the preset sorting control on the target page; wherein the sorting prompt information is used for prompting a sorting mode corresponding to the exhibition order of the multimedia works corresponding to the first user exhibited on the target page;
hiding and not displaying the sorting prompt information, when monitoring that a display duration of the sorting prompt information reaches a preset duration.

5. The method according to any one of claims 1 to 4, wherein after the updating an exhibition order of the multimedia works corresponding to the first user on the target page in a descending sort order of the user interaction counts, in response to a trigger operation on a preset sorting control on the target page, the method further comprises:
acquiring work interaction data of the first user within a current update cycle according to a preset update frequency; wherein the work interaction data comprises an identifier of at least one of the multimedia works having a changed user interaction count;
acquiring a current user interaction count of the multimedia works corresponding to the first user based on the identifier of the at least one of the multimedia works;
updating the exhibition order of the multimedia works corresponding to the first user on the target page, based on the current user interaction counts of the multimedia works corresponding to the first user.

6. The method according to claim 5, wherein the acquiring work interaction data of the first user within a current update cycle according to a preset update frequency, comprises:
reading the work interaction data of the first user within the current update cycle from a message queue of a target server according to the preset update frequency.

7. The method according to claim 5, wherein the acquiring work interaction data of the first user within a current update cycle according to a preset update frequency, comprises:
reading the work interaction data of the first user within delay time corresponding to a delay message from a delay queue, based on the delay message; wherein the delay time is used for representing an update frequency of the exhibition order of the multimedia works corresponding to the first user.

8. A multimedia work exhibiting apparatus, comprising:
an exhibiting module, configured to exhibit multimedia works corresponding to a first user on a target page corresponding to the first user; wherein a cover of each of the multimedia works displays a user interaction count corresponding to the each of the multimedia works;
a first updating module, configured to update an exhibition order of the multimedia works corresponding to the first user on the target page in a descending sort order of the user interaction counts, in response to a trigger operation on a preset sorting control on the target page.

9. A computer readable storage medium, having instructions stored thereon, wherein the instructions, when running on a terminal device, cause the terminal device to implement the method according to any one of claims 1 to 7.

10. A multimedia work exhibiting device, comprising: a memory, a processor, and a computer program stored on the memory and executable on the processor, wherein the processor, when executing the computer program, implements the method according to any one of claims 1 to 7.

11. A computer program product, comprising a computer program/instruction, wherein the computer program/instruction, when executed by a processor, implements the method according to any one of claims 1 to 7.
